# EUROPEAN PATENT SPECIFICATION

(11) **EP 3 854 758 B1**
(45) Date of publication and mention of the grant of the patent: **25.01.2023**
(21) Application number: 18938928.1
(22) Date of filing: 27.11.2018
(51) Int. Cl.: C02F 11/18, D21H 17/01, B01J 19/12

(54) **PRETREATMENT DEVICE AND PROCESS FOR PAPER PRODUCT FILLER**
VORRICHTUNG UND VERFAHREN ZUR VORBEHANDLUNG VON PAPIERPRODUKTFÜLLERN
DISPOSITIF DE PRÉTRAITEMENT ET PROCÉDÉ POUR CHARGE DE PRODUIT EN PAPIER

(30) Priority: 31.10.2018 CN 201811287113
(43) Date of publication of application: 28.07.2021
(73) Proprietor: Jiangnan University, Wuxi, Jiangsu 214122 (CN)
(72) Inventor: SUN, Hao, Wuxi, Jiangsu 214122 (CN); WANG, Tingting, Wuxi, Jiangsu 214122 (CN); GAO, Xinyu, Wuxi, Jiangsu 214122 (CN); LU, Lijing, Wuxi, Jiangsu 214122 (CN); LI, Danyang, Wuxi, Jiangsu 214122 (CN)
(74) Representative: Murgitroyd & Company
(86) International application number: PCT/CN2018/117659
(87) International publication number: WO 2020/087608

(56) References cited:
- WO-A1-2015/179199
- NO-L- 770 926
- US-A1- 2002 088 587

## Description

### TECHNICAL FIELD

The invention relates to the field of paper products, and particularly, to a device for pretreating a filler for paper product,

### BACKGROUND

Paper products are widely used in all aspects of our life and industry. With the expanded application of paper products in consumption field, the consumption of the paper products increases rapidly. 20 trees aged 20-40 years are consumed to produce one ton of paper products, while the recycling rate of waste paper fiber is relatively low. In the period of dramatic decline in forest resources and rapid development of industry, a novel material for replacing the traditional paper fiber may have significance and prospect.

### SUMMARY

In view of the above defects, the present invention provides a device for pretreating a filler for paper product, so as to implement resource recycling by pretreating of soil and residual substances of biological fermentation.

For the above purposes, the present invention provides the following technical scheme:
A device for pretreating a filler for paper product, comprising: a screw pump, a homogenizer, a material delivery pump, a metering tank, a microwave reactor, a main reactor, an energy conversion system, a decompressor, a dehydrator, a recycling water tank and a recycling pump,
wherein a raw material is fed at an input end of the screw pump, an output end of the screw pump is connected with the homogenizer through a pipeline, an input end of the homogenizer is a raw filler inlet and provided with an input of a constantly open pipeline for high-temperature circulating liquid, the material delivery pump is installed on a connecting pipeline between an output end of the homogenizer and an input end of the microwave reactor, an output end of the microwave reactor is connected with an input end of the main reactor through a pipeline, an output end of the main reactor is connected with the energy conversion system through a pipeline, the energy conversion system, the decompressor, the dehydrator, the recycling water tank and the recycling pump are sequentially connected through pipelines, the recycling pump delivers liquid in the recycling water tank to the main reactor and the metering tank, and an output end of the metering tank is connected with the homogenizer through a pipeline, thus forming a thermal and water recycling system.

Also disclosed is a process comprising:
Step I: feeding a raw filler into a homogenizer through a pipeline, adding part of a high-temperature circulating liquid into the homogenizer for homogenizing and heating, and delivering a mixed raw filler to a microwave reactor through the material delivery pump; Step II: delivering an intermediate filler pretreated by the microwave reactor to a main reactor through a pipeline;
Step III: heating the intermediate filler through a secondary mixing with the circulating liquid and assistant heating in the main reactor for a thermochemical reaction to effectively oxidize organic components of the intermediate filler into water and carbon dioxide so as to partially convert the intermediate filler into water; and
Step IV: exchanging heat effectively from an treated filler solution after the thermochemical reaction in the main reactor to recycling water in an energy conversion system.

In a further improvement to the scheme, the reaction time of the microwave reactor is 0-30 min, and the power is 0-2200 kW.

In a further improvement to the scheme, the reaction pressure in the main reactor is 0-22 MPa, the reaction temperature is > 20 °C, and the reaction time is ≥ 5 min.

In a further improvement to the scheme, the raw filler is made of soil and residual substances of biological fermentation, such as municipal sludge, industrial sludge, river sludge, pharmaceutical sludge, herb residues and distilled grain.

In a further improvement to the scheme, the mixed raw filler comprises 150 parts of original filler, 0-8 MPa of oxygen, 0-150 parts of oxygen-enriched water, 0-150 parts of H₂O₂ and a proper amount of water.

In a further improvement to the scheme, the content of O₂ or O₃ in the oxygen-enriched water is 5-50 mg/mL.

In a further improvement to the scheme, the treated filler slurry can be directly fed into a slurry tank for mixing with plant fibers without filtration, the adding amount of the treated filler is less than 60%, and paper products made of the treated filler can be recycled, directly discarded and naturally degraded into soil for plantation or crushed into soil for plantation for reuse or disposition.

In a further improvement to the scheme, in Step IV, the recycling water can be reused.

The invention has the following advantages:
The paper product made of the filler, in which the adding amount of the filler may be up to 60%, can save massive plant fiber materials. Meanwhile, application of the filler saves plant fiber resources, reduces the cost on raw materials, provides a mode for utilizing soil and residual substances of biological fermentation in industrial manufacture, and improves the value of such resources. The present invention also effectively protects forest resources from excessive felling, reduces the carbon emissions and expands the range of industrial resources.

The filler has excellent physical and chemical properties. It can be fully dispersed in slurry and fully connected with fibers, giving a high retention rate. Thus the filler can be fully mixed with the fibers, and the produced paper products will not have the phenomena of layering and non-uniform dispersion. Since the filler completely fills the gaps between fibers and chemical bonds are formed, produced paper products features smooth surface, and problems such as powder falling can be avoided. Paper products made of the filler demonstrate densities close to those of conventional paper products, and in the condition of similar thickness, show better mechanical properties.

### BRIEF DESCRIPTION OF THE DRAWINGS

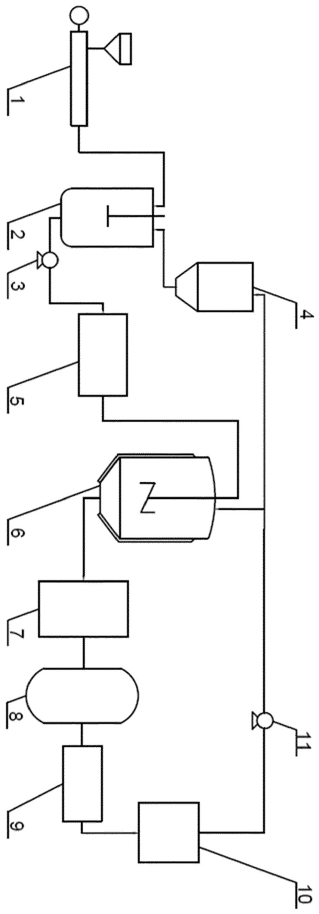

FIG. 1 is a schematic of the general structure according to the present invention.

### DETAILED DESCRIPTION

The technical schemes in the embodiments of the present invention will be clearly and completely described below with reference to the drawings in the embodiments of the present invention.

Referring to FIG. 1, for the above purposes, the present invention provides the following technical scheme:
A device for pretreating a filler for paper product, comprising: a screw pump 1, a homogenizer 2, a material delivery pump 3, a metering tank 4, a microwave reactor 5, a main reactor 6, an energy conversion system 7, a decompressor 8, a dehydrator 9, a recycling water tank 10 and a recycling pump 11,
wherein a raw material is fed at an input end of the screw pump 1, an output end of the screw pump is connected with the homogenizer 2 through a pipeline, an input end of the homogenizer 2 is a raw filler inlet and provided with an input of a constantly open pipeline for high-temperature circulating liquid, the material delivery pump 3 is installed on a connecting pipeline between an output end of the homogenizer and an input end of the microwave reactor 5, an output end of the microwave reactor 5 is connected with an input end of the main reactor 6 through a pipeline, an output end of the main reactor 6 is connected with the energy conversion system 7 through a pipeline, the energy conversion system 7, the decompressor 8, the dehydrator 9, the recycling water tank 10 and the recycling pump 11 are sequentially connected through pipelines, the recycling pump 11 delivers liquid in the recycling water tank 10 to the main reactor 6 and the metering tank 4, and an output end of the metering tank 4 is connected with the homogenizer 2 through a pipeline, thus forming a thermal and water recycling system.

Also disclosed is a process comprising:
Step I: feeding a raw filler into a homogenizer 2 through a pipeline, adding part of a high-temperature circulating liquid into the homogenizer 2 for homogenizing and heating, and delivering a mixed raw filler to a microwave reactor 5 through the material delivery pump 3;
Step II: delivering an intermediate filler pretreated by the microwave reactor 5 to a main reactor through a pipeline;
Step III: heating the intermediate filler through a secondary mixing with the circulating liquid and assistant heating in the main reactor 6 for a thermochemical reaction to effectively oxidize organic components of the intermediate filler into water and carbon dioxide so as to partially convert the intermediate filler into water; and
Step IV: exchanging heat effectively from an treated filler solution after the thermochemical reaction in the main reactor 6 to recycling water in an energy conversion system 7.

In a further improvement to the scheme, the reaction time of the microwave reactor 5 is 0-30 min, and the power is 0-2200 kW.

In a further improvement to the scheme, the reaction pressure in the main reactor 6 is 0-22 MPa, the reaction temperature is > 20 °C, and the reaction time is ≥ 5 min.

In a further improvement to the scheme, the raw filler is made of soil and residual substances of biological fermentation, such as municipal sludge, industrial sludge, river sludge, pharmaceutical sludge, herb residues and distilled grain.

In a further improvement to the scheme, the mixed raw filler comprises 150 parts of original filler, 0-8 MPa of oxygen, 0-150 parts of oxygen-enriched water, 0-150 parts of H₂O₂ and a proper amount of water.

In a further improvement to the scheme, the content of O₂ or O₃ in the oxygen-enriched water is 5-50 mg/mL.

In a further improvement to the scheme, the treated filler slurry can be directly fed into a slurry tank for mixing with plant fibers without filtration, the adding amount of the treated filler is less than 60%, and paper products made of the treated filler can be recycled, directly discarded and naturally degraded into soil for plantation or crushed into soil for plantation for reuse or disposition.

In a further improvement to the scheme, in Step IV, the recycling water can be reused.

## Claims

1. A device for pretreating a filler for paper product, comprising: a screw pump (1), a homogenizer (2), a material delivery pump (3), a metering tank (4), a microwave reactor (5), a main reactor (6), an energy conversion system (7), a decompressor (8), a dehydrator (9), a recycling water tank (10) and a recycling pump (11),
wherein a raw material is fed at an input end of the screw pump (1), an output end of the screw pump is connected with the homogenizer (2) through a pipeline, an input end of the homogenizer (2) is a raw filler inlet and provided with an input of a constantly open pipeline for high-temperature circulating liquid, the material delivery pump (3) is installed on a connecting pipeline between an output end of the homogenizer and an input end of the microwave reactor (5), an output end of the microwave reactor (5) is connected with an input end of the main reactor (6) through a pipeline, an output end of the main reactor (6) is connected with the energy conversion system (7) through a pipeline, the energy conversion system (7), the decompressor (8), the dehydrator (9), the recycling water tank (10) and the recycling pump (11) are sequentially connected through pipelines, the recycling pump (11) delivers liquid in the recycling water tank (10) to the main reactor (6) and the metering tank (4), and an output end of the metering tank (4) is connected with the homogenizer (2) through a pipeline, thus forming a thermal and water recycling system.

## Patentansprüche

1. Eine Vorrichtung zum Vorbehandeln eines Füllstoffs für ein Papierprodukt, beinhaltend:
eine Schraubenpumpe (1), einen Homogenisator (2), eine Materialzufuhrpumpe (3), einen Dosiertank (4), einen Mikrowellenreaktor (5), einen Hauptreaktor (6), ein Energieumwandlungssystem (7), einen Dekompressor (8), einen Entwässerer (9), einen Recyclingwassertank (10) und eine Recyclingpumpe (11),
wobei ein Rohmaterial an einem Eingangsende der Schraubenpumpe (1) eingespeist wird, ein Ausgangsende der Schraubenpumpe durch eine Rohrleitung mit dem Homogenisator (2) verbunden ist, ein Eingangsende des Homogenisators (2) ein Rohfüllstoffeinlass ist und mit einem Eingang einer konstant offenen Rohrleitung für Hochtemperatur-Umlaufflüssigkeit versehen ist, die Materialzufuhrpumpe (3) an einer Verbindungsrohrleitung zwischen einem Ausgangsende des Homogenisators und einem Eingangsende des Mikrowellenreaktors (5) installiert ist, ein Ausgangsende des Mikrowellenreaktors (5) durch eine Rohrleitung mit einem Eingangsende des Hauptreaktors (6) verbunden ist, ein Ausgangsende des Hauptreaktors (6) durch eine Rohrleitung mit dem Energieumwandlungssystem (7) verbunden ist, das Energieumwandlungssystem (7), der Dekompressor (8), der Entwässerer (9), der Recyclingwassertank (10) und die Recyclingpumpe (11) durch Rohrleitungen sequentiell verbunden sind, die Recyclingpumpe (11) Flüssigkeit in dem Recyclingwassertank (10) dem Hauptreaktor (6) und dem Dosiertank (4) zuführt und ein Ausgangsende des Dosiertanks (4) durch eine Rohrleitung mit dem Homogenisator (2) verbunden ist, sodass ein Wärme- und Wasserrecyclingsystem gebildet wird.

## Revendications

1. Un dispositif pour prétraiter une charge pour un produit de papier, comprenant : une pompe à vis (1), un appareil d'homogénéisation (2), une pompe de distribution de matériau (3), un réservoir jauge (4), un réacteur à micro-ondes (5), un réacteur principal (6), un système de conversion d'énergie (7), un décompresseur (8), un déshydrateur (9), un réservoir d'eau de recyclage (10) et une pompe de recyclage (11),
dans lequel un matériau brut est introduit au niveau d'une extrémité d'entrée de la pompe à vis (1), une extrémité de sortie de la pompe à vis est reliée à l'appareil d'homogénéisation (2) par le biais d'un pipeline, une extrémité d'entrée de l'appareil d'homogénéisation (2) est une entrée de charge brute et équipée d'une entrée d'un pipeline constamment ouvert pour un liquide de circulation à haute température, la pompe de distribution de matériau (3) est installée sur un pipeline de liaison entre une extrémité de sortie de l'appareil d'homogénéisation et une extrémité d'entrée du réacteur à micro-ondes (5), une extrémité de sortie du réacteur à micro-ondes (5) est reliée à une extrémité d'entrée du réacteur principal (6) par le biais d'un pipeline, une extrémité de sortie du réacteur principal (6) est reliée au système de conversion d'énergie (7) par le biais d'un pipeline, le système de conversion d'énergie (7), le décompresseur (8), le déshydrateur (9), le réservoir d'eau de recyclage (10) et la pompe de recyclage (11) sont reliés séquentiellement par le biais de pipelines, la pompe de recyclage (11) distribue du liquide dans le réservoir d'eau de recyclage (10) jusqu'aux réacteur principal (6) et réservoir jauge (4) et une extrémité de sortie du réservoir jauge (4) est reliée à l'appareil d'homogénéisation (2) par le biais d'un pipeline, formant de ce fait un système thermique et de recyclage d'eau.
